# EUROPÄISCHE PATENTANMELDUNG

(11) **EP 4 187 395 A1**
(43) Veröffentlichungstag der Anmeldung: **31.05.2023**
(21) Anmeldenummer: 22209757.8
(22) Anmeldetag: 25.11.2022
(51) Int. Cl.: G06F 13/10, G06F 13/42, G06F 13/38, H04L 12/40, G06F 13/40, G06F 13/12

(54) **VERFAHREN UND EINRICHTUNG ZUR EMULATION VON ÜBERTRAGUNGSPROTOKOLLEN ZUR ANSTEUERUNG VON ELEKTRONISCHEN BAUSTEINEN AN EINEM BUSSYSTEM**

(30) Priorität: 26.11.2021 DE 102021131144
(71) Anmelder: Göpel electronic GmbH, 07745 Jena (DE)
(72) Erfinder: Wenzel, Ricardo, 07749 Jena (DE); Ernst, Kevin, 07958 Hohenleuben (DE)
(74) Vertreter: Gleim Petri Oehmke Patent- und Rechtsanwaltspartnerschaft mbB

(57) **Zusammenfassung**

Die Erfindung betrifft ein Verfahren und eine Einrichtung zur Emulation von Übertragungsprotokollen zur Ansteuerung von elektronischen Bausteinen an einem Bussystem.

Die Aufgabe, eine neue Möglichkeit zum Betreiben der Datenkommunikation in einem Bussystem mit serieller oder paralleler Datenübertragung in einem Bussystem mit serieller oder paralleler Datenübertragung zu finden, die unabhängig von Kundeninterfaces und Übertragungsprotokollen eine Implementierung neuer Produkte ohne Hardwareanpassung gestattet, wird erfindungsgemäß gelöst, indem eine Emulation von Übertragungsprotokollen der Datenkommunikation zwischen mittels Controllern an ein Bussystem (1) gekoppelten Hardwarekomponenten erfolgt durch Bereitstellen einer Softwarekomponente (3), die für die Datenkommunikation einen mit dem Bussystem (1) verbundenen universellen Master-Controller (21) protokollunabhängig mittels einer generischen taktorientierten Kodierung (31) ansteuert, durch Erzeugen von unterschiedlichen Taktsequenzen (32) der taktgesteuerten Kodierung (31) zur Steuerung der Pin-Funktionen von Controller-Pins (24) des Master-Controllers (21), und Ansteuern des Master-Controllers (21) mittels jeweils einer bestimmten aus unterschiedlich modulierten Binärsignalen bestehenden Taktsequenz (32), die definiert, ob ein Controller-Pin (24) als Eingang, Ausgang oder bidirektionaler Port definiert und zu welchen Zeitpunkten das Abtasten oder Treiben von Signalen erfolgt.

## Beschreibung

Die Erfindung betrifft ein Verfahren und eine Einrichtung zur Emulation von Übertragungsprotokollen zur Ansteuerung von elektronischen Bausteinen an einem Bussystem, insbesondere für die Ansteuerung von seriellen und parallelen Interfaces und die damit verbundene Vielfalt an Übertragungsprotokollen, ausgenommen Highspeed-Bussysteme, wie PCI(e), Ethernet oder USB.

Das Anwendungsgebiet der Erfindung liegt auf dem Gebiet der elektronischen Endkontrolle und Programmierung von technischen Produkten aller Art, die eine elektronische Steuerung aufweisen, insbesondere von Einzelkomponenten in der Automobilindustrie.

Im Stand der Technik sind Software-Emulatoren als Programme bekannt, die einen Computer oder ein Betriebssystem nachbilden und es so ermöglichen, Software für diesen Computer auf einem anderen Computer mit einer anderen Architektur zu erstellen. Softwareentwickler können auch ein Programm, das sie für ein bestimmtes Gerät (z. B. ein Mobiltelefon) entwickeln, dieses in einem Emulator testen und korrigieren, ohne es jedes Mal auf das Originalgerät kopieren zu müssen. Beschränkt sich eine Emulation lediglich auf die Emulation von Softwareschnittstellen, ohne das gesamte System zu emulieren, wird im strengen Sinne von einer Kompatibilitätsschicht gesprochen. Diese strenge Unterscheidung soll hier nicht angewendet werden.

Serielle Übertragungsprotokolle werden grundlegend nach synchronen und asynchronen Ansteuerungen unterschieden. Synchron serielle Übertragungsprotokolle definieren die Art der Informationsübertragung durch eine gemeinsame Taktrate, die als eigenes Signal (Taktsignal) vom Master an den/die Slave(s) gesendet wird und als Synchronisationszeitpunkt für die Gültigkeit der Daten dient. Daraus folgt, dass Slave(s) nicht selbständig Daten auf den Bus senden können, sie benötigen zwangsweise einen Master, welcher das Taktsignal sendet. Asynchrone serielle Übertragungsprotokolle nutzen zwar ebenfalls eine gemeinsame Taktrate für die Informationsübertragung, führen diese jedoch nicht als eigenes Taktsignal nach außen. Dadurch gibt es keinen gemeinsamen Synchronisationszeitpunkt und folglich kann jeder Kommunikationsteilnehmer zu jedem Zeitpunkt Daten senden bzw. empfangen.

Je nach Art der physischen Schnittstelle (Interface) und des zu verwendenden Übertragungsprotokolls kommen dabei getrennte Eingabe/Ausgabe oder bidirektionale Signale zum Einsatz. Die Einsatzgebiete der Protokolle sind vielfältig und kommen daher in verschiedensten Anwendungen, wie z.B. bei der Flash-Programmierung oder der Kommunikation zwischen unterschiedlichen Bausteinen, zum Einsatz. Ein solcher Hardware-Baustein, meist als Steuereinheit (engl. "Controller") bezeichnet, wird an einen Bus angeschlossen und stellt die physikalische Verbindung zwischen Master und Slave(s) oder Master und anderem/n Master(n) her.

Master-Slave-Beziehungen mit synchron-serieller Informationsübertragung sind insbesondere bei den meistverbreiteten I²C- und SPI-Bussystemen zu finden, wobei die Übertragungsart dieser synchronen seriellen Protokolle deutliche Unterschiede auf physikalischer Ebene und der damit verbundenen Datenübertragung zeigt.

So verwendet I²C neben dem Taktsignal (SCL) für die Datenübertragung lediglich ein bidirektionales Signal (SDA). Der Master ist somit verantwortlich, seinen SDA-Pin nach einer definierten Anzahl von Takten in seiner Funktion von Ausgang (Treiben) auf Eingang (Empfangen) zu ändern.

Bei dem SPI Bussystem werden hingegen vier Varianten unterschieden, welche als Gemeinsamkeit ein Taktsignal (SCK) und ein ChipSelect-Signal (CS) verwenden, sich jedoch in der Anzahl und Ausrichtung der Datensignale unterscheiden. So verwendet Single-SPI ein Daten-Ausgangssignal (MOSI) und ein Daten-Eingangssignal (MISO). Dabei werden mit jedem Takt Daten auf den MOSI getrieben und zeitgleich auf dem MISO-Daten empfangen. Durch die Trennung zwischen Eingang und Ausgang existiert somit kein bidirektionaler Signalfluss. Bei den restlichen Varianten kommen anstatt fester Eingabe und Ausgabe-Datensignale mehrere bidirektionale Signale zum Einsatz. Dual-SPI verwendet zwei bidirektionale Datensignale (IO0, IO1), Quad-SPI vier bidirektionale Datensignale (IO0-IO3) und Octal-SPI acht bidirektionale Datensignale (IO0-IO7). Je mehr Datensignale verwendet werden, desto höher ist die Übertragungsrate bei gleichbleibender Taktfrequenz. Das heißt, um bei Single-SPI ein Byte (acht Datenbits) zu übertragen, werden acht Takte benötigt, wohingegen bei Quad-SPI lediglich zwei Takte gebraucht werden. Wie bei dem I²C-Bus ist der Master somit verantwortlich, die Funktion der bidirektionalen Datensignale von Ausgang (Treiben) auf Eingang (Empfangen) zu verändern, sobald der/die Slave(s) Daten senden.

Weitere Vertreter der synchronen seriellen Protokolle sind auf dem Gebiet des Prozessor- /Microcontroller-Debug-Zugriffs zu finden, die nachfolgend kurz genannt sind
- Joint Test Action Group (JTAG)
- Serial Wire Debug (SWD)
- Device Access Port (DAP)
- Spy-Bi-Wire (SBW)
- In-Circuit-Serial Programming (ICSP)

Letztere kommen zum Einsatz, um auf die internen Ressourcen zugreifen zu können und z.B. einen internen Flash zu programmieren oder bestimmte Test-Ressourcen anzusteuern.

Typische Vertreter der asynchronen seriellen Protokolle sind UART (Universal Asynchronous Receiver Transmitter) für Schnittstellen RS232 oder RS485 und CAN (Controller Area Network). Beide verwenden für die Datenübertragung einen Ausgang (TxD) und einen Eingang (RxD). Es existiert somit kein bidirektionales Signal.

Weitere Vertreter für asynchrone serielle Protokolle sind:
- Controller Area Network Flexible Data Rate (CAN _FD)
- Local Interconnection Network (LIN)

Im Vergleich zu den seriellen Interfaces und deren Protokollen, welche die Datenübertragung auf wenigen Pins/Signalen mit Hilfe mehrerer Takte umsetzen, wird bei den parallelen Interfaces ein Pin pro zu übertragender Information verwendet und somit nur ein Takt benötigt. Dies reicht von einfachen Interfaces, wie z.B. ein Enable-Signal und acht Datensignalen, für die Aktivierung und Übertragung von acht Datenbits bis hin zu Interfaces von NAND-Flashbausteinen mit 32 Signalen für die Adresse, 32 bidirektionalen Datensignalen und einigen Signalen für die Steuerung (Lesen/Schreiben-Signal, Enable-Signal etc.).

Aus dem Stand der Technik sind für die Ansteuerung von Bussystemen spezifische Controller bekannt, die - abstrakt betrachtet - aus folgenden zwei Elementen bestehen:
- der Hardware-Einheit (Master) und
- der Software-Einheit zur Ansteuerung der Hardware-Einheit.

Die Software-Einheit ermöglicht es dem Anwender, durch vorgegebene Funktionen die zu übertragenden Daten zu definieren, das bedeutet z. B. beim SPI-Protokoll i.d.R. das Kommando, die Adresse und die Daten. Diese Informationen werden durch die Software in die internen Register der Hardware-Einheit transferiert. Die Hardware-Einheit verwendet die Informationen, um eine physikalische Sequenz von 1/0-(High/Low)-Pegeln für seine Pins zu erzeugen und auszugeben bzw. auf Eingängen zu messen. Die zu erzeugende Form der Sequenz ist dabei fest durch das aktive Protokoll (single SPI, dual SPI, quad SPI, octal SPI, I²C, JTAG, SBW, DAP, SWD, ICSP, CAN, UART, ...) vorgegeben.

Der Anwender steuert somit den Dateninhalt des Protokolls durch eine logische Ebene, hat selbst aber keinen Zugriff auf die realen Pin-Funktionen der Hardware-Einheit. Die Hardware-Einheit kann dabei ein eigener physikalischer Baustein für ein dediziertes Interface/Protokoll sein, oder als Teil eines Bausteines existieren oder als IP-Core in einem FPGA konfiguriert werden.

Bei immer komplexer werdenden Schaltungsentwürfen können Entwurfsblöcke zu einem System on a Chip (SoC) zusammengefügt werden. Diese Entwurfsblöcke werden IP-Cores (IP - Intellectual Property oder geistiges Eigentum) genannt. Ein IP-Core ist also eine vorgefertigte, mehrfach verwendbare Funktionseinheit, die als Makro in das Chipdesign eingebunden werden kann. Hierdurch können große Teile eines Entwurfes bereits fertig spezifiziert und getestet und auch von Fremdanbietern in unterschiedlichen Systemen nachgenutzt werden.

Meist sind IP-Cores häufig verwendete, große und komplexe Funktionseinheiten, wie Standard-Bus-Schnittstellen (z.B. PCI, AGP, USB, Firewire, CAN, ISA, I²C), DSP (Digital Signal Processing-) Funktionen (z.B. DFT, FFT, FIR-Filter) sowie Telekommunikations- und Multimedia-Anwendungen (z.B. MP3, MPEG, JPEG, Spracherkennung, DSL-Modems, UMTS, Ethernet, Bluetooth), sowie auch ganze Mikroprozessoren.

Grundsätzlich unterscheidet man bei der Implementierung zwischen Hard-IPs und Soft-IPs. Erstere sind durch fest vorgegebenes Layout, Timing und fixe Schnittstellen charakterisiert; außerdem sind sie in Bezug auf Geschwindigkeit, Siliziumfläche und Leistungsaufnahme optimiert. Sie sind einerseits leicht zu verifizieren, andererseits halbleiterhersteller- und technologieabhängig, unflexibel und deshalb oft problematisch beim Produktionstest.

Soft-Cores indes basieren auf einer synthetisierbaren Beschreibung, ausgehend von einer Hardware-Beschreibungssprache, wie Verilog oder VHDL; sie sind vorkompiliert oder als Source-Code verfügbar und zudem auch halbleiterhersteller- und technologieunabhängig konzipiert. Einerseits sind sie flexibel und zum Teil parametrisierbar, andererseits benötigen sie mehrere Iterationen bei der Designoptimierung (Floorplanning, Logiksynthese, Place & Route) und höheren Verifikationsaufwand - besonders bei Änderungen des Source-Codes.

Muss ein neues Protokoll unterstützt werden, ergibt sich, dass entweder ein neuer Hardware Controller entwickelt werden muss, oder ein weiterer IP-Core für den SoC bzw. FPGA. Zusätzlich muss die Software-Einheit erweitert/angepasst werden, um dem Anwender Funktionen für die protokoll-spezifischen Daten zur Verfügung zu stellen.

Im Stand der Technik werden aktuell Controller eingesetzt, bei denen sogenannte IP-Cores für die einzelnen Protokolle im FPGA hinterlegt sind. Doch auch diese Lösung ist nunmehr an ihre Grenzen gestoßen. Ein FPGA besitzt nicht unendlich viel Platz, um stetig weitere Protokolle aufnehmen zu können. Entweder wird eine neue Hardware-Revision mit einem größeren FPGA verbaut (erhöht den Einkaufspreis, Kunden müssen existente Hardware austauschen) oder es wird Platz geschaffen, indem einzelne Protokolle entfernt werden, um Platz für neue Protokolle zu haben. Keine dieser Lösungen ist eine akzeptable Option, daher muss nach einem neuen Ansatz gesucht werden.

Der Erfindung liegt die Aufgabe zugrunde, eine neue Möglichkeit zum Betreiben der Datenkommunikation in einem Bussystem mit serieller oder paralleler Datenübertragung zu finden, die unabhängig von Kundeninterfaces und Kommunikationsprotokollen neuer Produkte eine Implementierung ohne Hardwareanpassung gestattet.

Erfindungsgemäß wird die Aufgabe bei einem Verfahren zur Emulation von Übertragungsprotokollen der Datenkommunikation zwischen Hardwarekomponenten, die mittels Controllern in einem Master-Slave-System oder einer Multi-Master Konfiguration an ein Bussystem gekoppelt sind, gelöst mit den Schritten:
- Bereitstellen einer mit dem Bussystem verbundenen Hardwarekomponente, die einen universellen Master-Controller unabhängig des Bussystems enthält,
- Bereitstellen einer Softwarekomponente, die für die Datenkommunikation den universellen Master-Controller protokollunabhängig mittels einer generischen taktorientierten Kodierung ansteuert,
- Erzeugen von unterschiedlichen Taktsequenzen der taktgesteuerten Kodierung zur Steuerung der Pin-Funktionen von Controller-Pins des universellen Master-Controllers,
- Ansteuern des universellen Master-Controllers mittels jeweils einer bestimmten aus unterschiedlich modulierten Binärsignalen bestehenden Taktsequenz, die mindestens definiert, ob ein Controller-Pin als Eingang, Ausgang oder bidirektionaler Port definiert wird und welche Zeitpunkte für das Abtasten oder Treiben von Signalen genutzt werden.

Vorteilhaft werden die Taktsequenzen so erzeugt, dass sie für jeden Takt eine Kodierung der Pinwerte enthalten. Dabei können die Taktsequenzen so erzeugt werden, dass sie als Zeitpunkte für das Abtasten oder Treiben von Signalen entweder die steigende oder die fallende Flanke verwenden.

Neben unterschiedlichen Taktsequenzen zur Steuerung der Pin-Funktionen können vorteilhaft Taktsequenzen für weitere Steuerinformationen erzeugt werden, die einen Emulations-Treiber zur Ausführung von erweiterten Steueroptionen bei der Steuerung der Pin-Funktionen ansteuern.

Des Weiteren können neben unterschiedlichen Taktsequenzen zur Steuerung der Pin-Funktionen zweckmäßig weitere Taktsequenzen für Steueroptionen erzeugt werden, die den Emulations-Treiber zur Prüfung der Erfüllung der erweiterten Steueroptionen ansteuern.

Es erweist sich als besonders vorteilhaft, dass die Taktsequenzen zur Steuerung der Pin-Funktionen oder weitere Taktsequenzen für Steueroptionen mit variierbaren Signalpegeln erzeugt werden, um beliebige serielle Protokolle auf die Controller-Pins umsetzen zu können.

Dabei können die weiteren Taktsequenzen für Steueroptionen vorzugsweise zum Optimieren der Ausführungszeit der Steuerung der Pin-Funktionen verwendet werden. Zweckmäßig können die weiteren Taktsequenzen für Steueroptionen zum Erzeugen komplexer Pegelfolgen verwendet werden.

Weiterhin wird die Aufgabe der Erfindung bei einer Einrichtung zur Emulation von Übertragungsprotokollen zwischen Hardwarekomponenten, die mit Controllern an ein Bussystem gekoppelt sind, dadurch gelöst, dass
- mindestens eine mit dem Bussystem verbundenen Hardwarekomponente einen universellen Master-Controller des Bussystems enthält,
- der mindestens eine universelle Master-Controller mit einer Softwarekomponente in Verbindung steht, die zur protokollunabhängigen Ansteuerung des Master-Controllers mit einer generischen taktorientierten Kodierung zur Pin-Konfiguration für die Datenkommunikation ausgestattet ist,
- für jeden Controller-Pin ein Konfigurationsregister und mindestens einen Datenspeicher aufweist, die über einen Ausführer mit den Pin-Treibern des Master-Controllers verknüpft und mittels eines Emulations-Treibers bedienbar sind.

Vorteilhaft umfasst der mindestens eine universelle Master-Controller - je nach Pin-Konfiguration - bis zu drei Datenspeicher pro Pin, wobei bei einem Ausgang ein Datenspeicher für die zu treibende Information (high/low), bei einem Eingang ein Datenspeicher für die gemessenen Werte, und bei einem bidirektionalen Pin ein Ausgangs-Datenspeicher, ein Eingangs-Datenspeicher und ein Richtungs-Datenspeicher, welcher pro Takt bestimmt, ob der Pin als Eingang oder Ausgang verwendet werden soll, zum Einsatz kommt.

Zweckmäßig sind die Datenspeicher zur Speicherung der mit der generischen taktorientierten Kodierung kodierten Daten vom Emulations-Treiber für jeden Controller-Pin taktorientiert organisiert.

Dabei können die Datenspeicher zweckmäßig als FIFOs ausgebildet sein, sodass die Taktsequenzen während der Abarbeitung dynamisch nachladbar und somit ohne Längenbegrenzung einsetzbar sind.

Besonders vorteilhaft sind IP-Cores eines FPGAs, die herkömmlich für die spezielle Transformation jedes einzelnen verwendeten Übertragungsprotokolls und Interfaces fest programmiert waren, nur noch für die Umsetzung der unterschiedlichen Pin-Konfigurationen für unterschiedlichste Übertragungsprotokolle und Interfaces, und nicht mehr für die Transformation einzelner Protokolle vorhanden.

Die Erfindung basiert auf der Grundüberlegung, dass mit jedem Projektwechsel ständig andere Interfaces und Übertragungsprotokolle zum Einsatz kommen und die eingesetzte Hardware in der Maschine ausgetauscht werden muss. Dadurch entstehen erhebliche Mehraufwände an Software und Hardwareanpassungen. Selbst wenn man einen FPGA dafür einsetzt, die einzelnen Protokolle mittels separater IP-Cores verfügbar zu machen, stößt man an eine Grenze, an der man bisherige Protokolle durch neue ersetzen muss oder einen größeren FPGA einzubauen hat, der dann neu programmiert werden muss. Die Lösung besteht nun darin, dass ein eingesetzter externer universeller Master-Controller alle potentiell notwendigen Übertragungsprotokolle und Interfaces unterstützen muss.

Die Erfindung besteht deshalb in einem generalisierten Software- und Hardware-Ansatz, der ein Verfahren zur protokollunabhängigen Pin-Steuerung des universellen Master-Controller beinhaltet, mit der eine taktorientierte Kodierung der Pin-Ansteuerung definiert wird, um sämtliche seriellen und parallelen Interfaces und deren Übertragungsprotokolle umsetzen zu können.

Beim erfindungsgemäßen Verfahren wird die Funktion der Controller-Pins durch eine aktiv steuerbare Pin-Konfiguration definiert. Diese Pin-Konfiguration definiert, ob ein Pin ein Eingang, Ausgang oder bidirektionaler Port ist, welche Zeitpunkte (steigende/fallende Taktflanke) für das Abtasten und Treiben von Signalen genutzt werden sollen und ob es sich um eine synchrone oder asynchrone Übertragung handelt. Dabei erhält die Hardware, d. h. konkret der universelle Master-Controller, von der Software lediglich eine Sequenz von Takten, wobei für jeden Takt eine Kodierung der Signalrichtung (Eingang/Ausgang) und der Pin-Werte (high/low) enthalten ist. Diese Taktsequenz, die als "Burst" bezeichnet wird, kann für seine Ausführung weitere Steuerinformationen hinterlegen. So ist es beispielsweise möglich, einen Burst n-mal ausführen zu lassen, ohne dass der Burst selbst n-mal von der Software an einen Emulation-Treiber gesendet werden muss. Im Falle einer asynchronen Übertragungsart, besteht zudem die Möglichkeit, Controller-Pins in einen "Continuous"- (bzw. Permanent)- Modus zu versetzen. Solange sich ein Pin in diesem Modus befindet, benötigt es keine explizite Taktsequenz, sondern erfüllt eine Aufgabe (z.B. permanentes Treiben eines definierten Pegels oder Abtasten des Signals in einem internen Pufferspeicher) permanent. Solche Steueroptionen dienen der Optimierung der Ausführungszeit und ermöglichen es, komplexere Pegelfolgen effektiv innerhalb der Hardware umzusetzen und zu steuern. Der Emulation-Treiber übernimmt darüber hinaus für alle Steuerinformationen die Rolle als Steuerinstanz und überwacht, dass die Steueroptionen umgesetzt/erfüllt werden. Die anzuwendende Pin Konfiguration, die zu verwendeten Pegel (in Volt) sowie die anzuwendende Taktrate wird von der Software als Laufzeitparameter bereits vor der ersten Taktsequenz (Burst) an den universellen Master-Controller übertragen. Im Falle einer synchronen Übertragung wird die Taktrate automatisch als Taktsignal während einer Taktsequenz ausgegeben.

Bei einer asynchronen Übertragung wird die auszuführende Taktsequenz zwar mit einer Taktrate ausgeführt, jedoch nicht als eigenes Taktsignal zu den weiteren Kommunikationsteilnehmern getrieben. Für das Abtasten eines Signals gilt das Abtasttheorem. Dabei wird das abzutastende Signal mit mindestens der doppelten Taktrate abgetastet, um durch den fehlenden Synchronisationszeitpunkt (Taktsignal) keinen Signalwechsel zu verpassen.

Das erfindungsgemäße Herauslösen der Übertragungsprotokoll-Logik aus der Hardware und deren Einfügung in einen generellen Softwareansatz eröffnet die Möglichkeit, auf den einzelnen Pins des universellen Master-Controllers beliebige Pegel in den Taktsequenzen umzusetzen, ohne dass eine neue Hardware oder neue Protokolltransformatoren entwickelt werden müssen. Mit diesem Softwareansatz lassen sich somit alle Übertragungsprotokolle serieller und paralleler Interfaces umsetzen, dies gilt auch für nicht-standardisierte Übertragungsprotokolle (z.B. eine eigene Umsetzung des SPI-Protokolls - Variation der Reihenfolge von Kommando, Adresse und Daten bzw. Wegfallen einzelner Informationen) und serielle bzw. parallele Übertragungsprotokolle, die bisher noch nicht existieren.

Mit der Erfindung wird eine neue Möglichkeit zur externen Ansteuerung eines Bussystems, zum Betreiben der Datenkommunikation in einem Bussystem mit serieller oder paralleler Datenübertragung realisiert, die unabhängig von Kundeninterfaces und/oder Kommunikationsprotokollen neuer Produkte eine Implementierung ohne Hardwareanpassung gestattet.

Die Erfindung wird nachfolgend anhand von Ausführungsbeispielen und Zeichnungen näher erläutert. Die Zeichnungen zeigen:
- Fig. 1:: eine schematische Darstellung des erfindungsgemäßen Verfahrens zur Emulation der Datenkommunikation in einem Bussystem unter Verwendung eines SoC,
- Fig. 2a:: eine schematische Darstellung eines üblichen I²C-Busses, bei dem eine häufig anzutreffende Master-Slave-Konfiguration vorliegt,
- Fig. 2b:: ein zugehöriges Kommunikationsschema gemäß dem Stand der Technik für den I²C-Bus nach Fig. 2a,
- Fig. 2c:: ein erfindungsgemäßes Kommunikationsschema für den I²C-Bus nach Fig. 2a unter Verwendung eines SoC,
- Fig. 3a:: eine schematische Darstellung eines üblichen SPI-Busses mit einer Sechs-Port-Pinbelegung (Quad SPI);
- Fig. 3b:: ein zugehöriges Kommunikationsschema gemäß dem Stand der Technik für den Quad-SPI-Bus nach Fig. 3a,
- Fig. 3c:: ein erfindungsgemäßes Kommunikationsschema für den Quad-SPI-Bus gemäß Fig. 3a unter Verwendung eines SoC,
- Fig. 4:: ein schematisches Blockdiagramm für eine Sequenzschleife,
- Fig. 5a:: eine schematische Darstellung eines üblichen einfachen RS232-(UART)-Busses, zwischen zwei Kommunikationsteilnehmern,
- Fig. 5b:: ein zugehöriges Kommunikationsschema gemäß dem Stand der Technik für den RS232-Bus nach Fig. 5a,
- Fig. 5c:: ein erfindungsgemäßes Kommunikationsschema für den RS232-Bus nach Fig. 5a unter Verwendung eines SoC,
- Fig. 6a:: eine schematische Darstellung eines üblichen CAN-Busses mit mehreren Kommunikationsteilnehmern,
- Fig. 6b:: ein zugehöriges Kommunikationsschema gemäß dem Stand der Technik für den CAN-Bus nach Fig. 6a,
- Fig. 6c:: ein erfindungsgemäßes Kommunikationsschema für den CAN-Bus nach Fig. 6a,
- Fig. 7:: ein Blockschaltbild der Hardware des universellen Master-Controllers zur Realisierung des erfindungsgemäßen Verfahrens unter Verwendung eines SoC.

Die schematischen Bussystem-Darstellungen zeigen dabei nur die verwendeten Datensignale und Pinbelegungen, die sog. Power- und Ground-Pins sind nicht gezeigt.

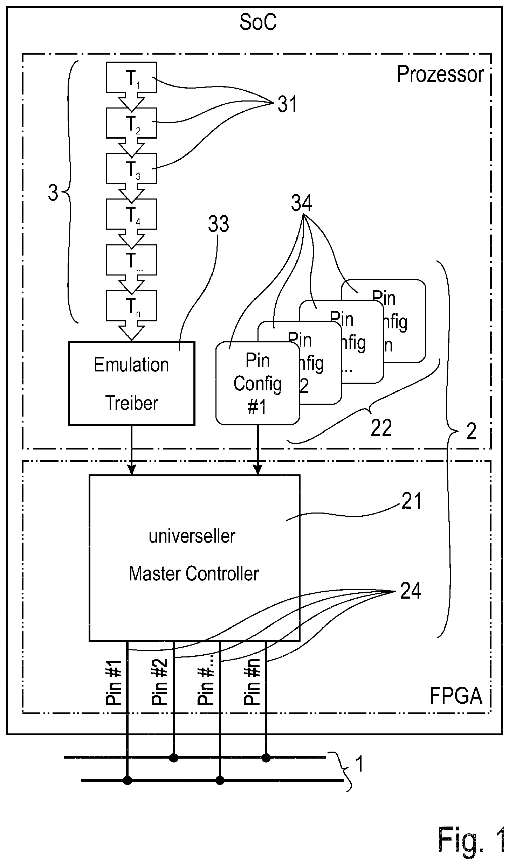

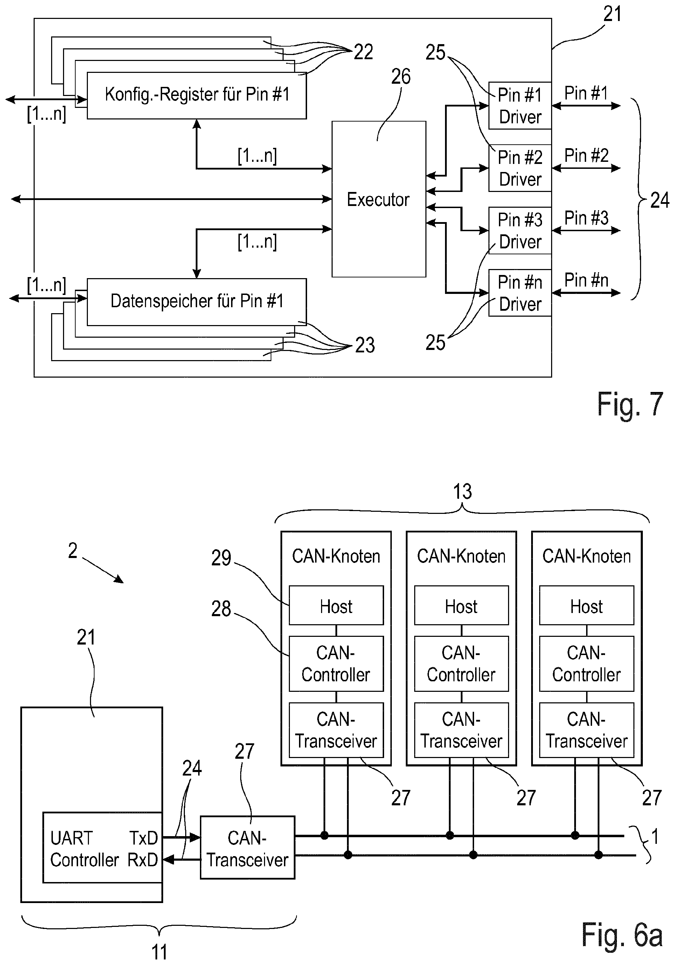

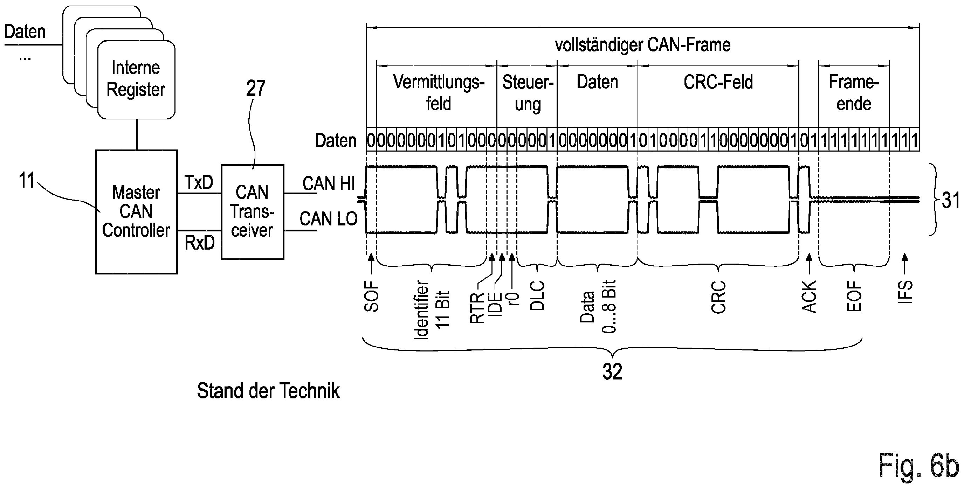

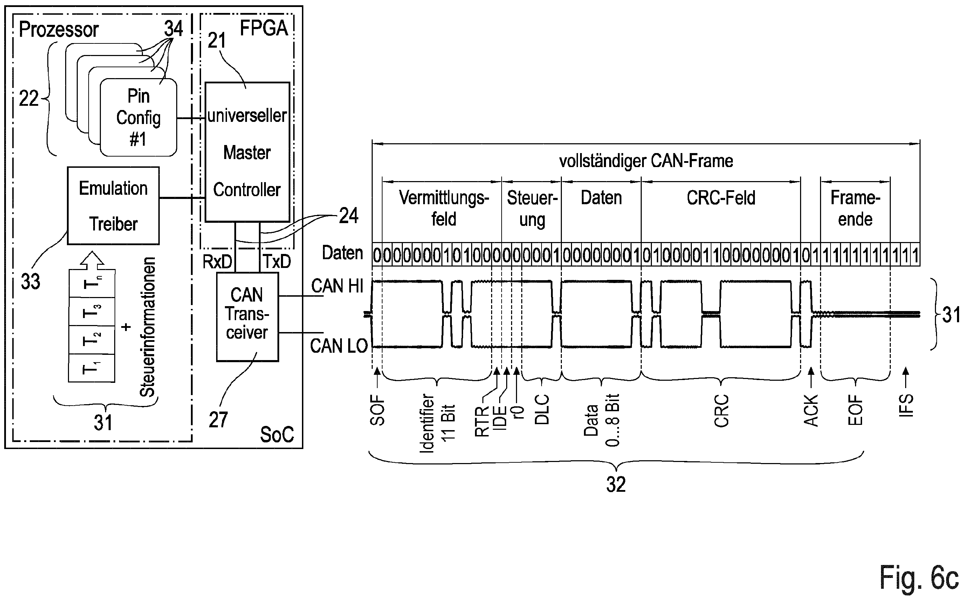

Das erfindungsgemäße Verfahren - wie in Fig. 1 schematisch dargestellt - repräsentiert einen neuen generalisierten Software- und Hardware-Ansatz, der darin besteht, dass an einem Bussystem 1, an dem ein universeller Master- 11 und ein oder mehrere Slaveeinheiten 12 oder ein Multi-Master-System 13 (nur in Fig. 6 und 7 gezeigt) angeschlossen sind, die Pin-Funktionen des universellen Master-Controllers 21 protokollunabhängig angesteuert werden. Fig. 1 stellt das erfindungsgemäße Schema zur Emulation der Datenkommunikation in einem Bussystem 1 durch Ansteuern eines universellen Master-Controllers 21 dar, das derart ausgebildet ist, dass Controller-Pins 22 des universellen Master-Controllers 21 unabhängig von Kundeninterfaces und/oder Kommunikationsprotokollen von beliebigen, mit Controllern ausgestatteten Kommunikationsteilnehmern zur Steuerung von Prüfplätzen für zu testende Objekte (z. B. zur Endkontrolle von Produkten einer Fertigungslinie oder Programmierung von Flashbausteinen) angepasst gesteuert werden können.

Anstatt eines für jedes Kommunikationsprotokoll spezifischen Protokoll-Transformators, der als IP-Core eines FPGA (nicht gezeichnet) für jede verwendete Protokollart der Datenkommunikation gespeichert werden muss, wird gemäß der Erfindung eine taktorientierte Kodierung (Taktkodierung 31) aus einer Softwarekomponente 3 für eine gesteuerte Pin-Konfiguration 34 für Controller-Pins 24 in einem Pin-Konfigurationsregister 22 einer Hardwarekomponente 2 definiert und über einen Emulations-Treiber 33 dem universellen Master-Controller 21 zugeführt. Damit wird in der Hardwarekomponente 2 (z. B. einem FPGA) nur ein IP-Core benötigt, um sämtliche seriellen und parallelen Interfaces anzusteuern und Übertragungsprotokolle flexibel umsetzen zu können.

Durch die als Software hinterlegte Taktkodierung 31 werden spezifische Taktsequenzen 32, verkürzt Bursts 32 genannt, definiert, die für die Steuerung der Controller-Pins 24 des universellen Master-Controllers 21 verwendet werden. Dafür wird in der Hardwarekomponente 2 die Pin-Konfiguration 34 des universellen Master-Controllers 21, im Pin-Konfigurationsregister 22 (nur in Fig. 7 bezeichnet) für die Laufzeit der Taktsequenz (vor der ersten Taktsequenz) hinterlegt. Somit sind die zu verwendenden Pins jederzeit jeweils zur Laufzeit der Taktsequenz durch die Software konfigurierbar und nicht statisch von der Hardware vorgegeben.

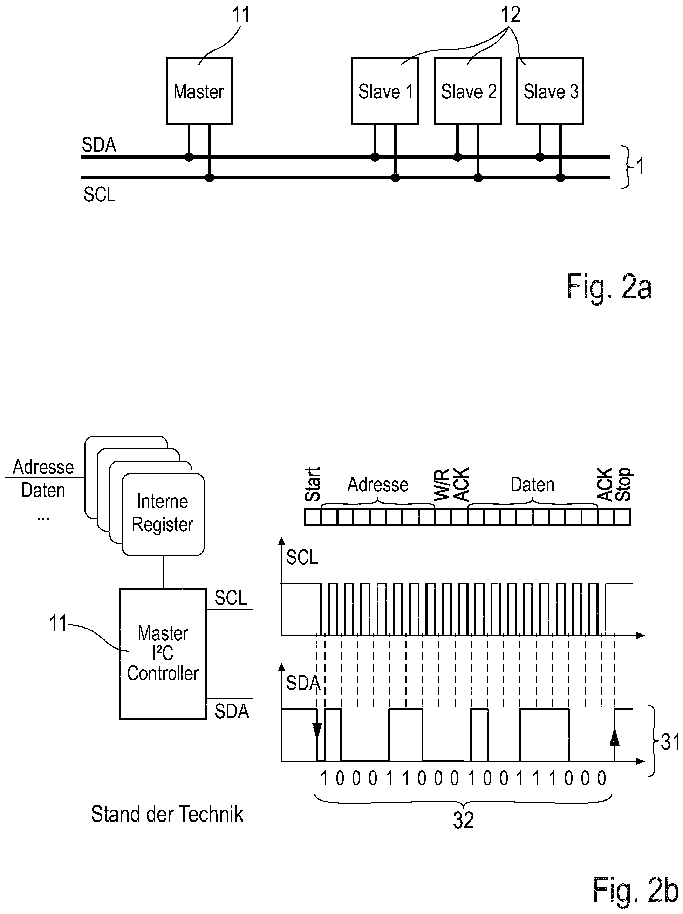

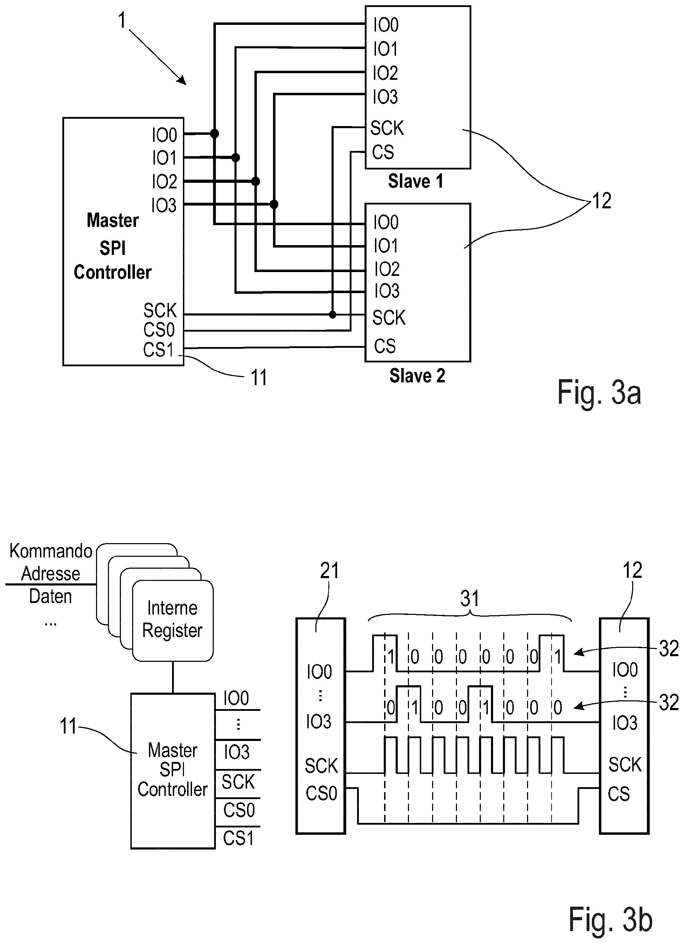

Die synchron-seriellen Steuerungsarten sind in den Fig. 2a-2c und Fig. 3a-3c dargestellt. Sie zeigen die Verknüpfungen von Mastereinheit 11 und Slaveeinheiten 12 an einem Systembus 1 für eine I²C-Kommunikation bzw. für eine Quad-SPI-Kommunikation. Beide Konfigurationen verkörpern Informationsübertragungen mit synchron-seriellen Protokollen, wobei aber auch die Unterschiede zwischen den Fig. 2a-2c und Fig. 3a-3c deutlich zu ersehen sind.

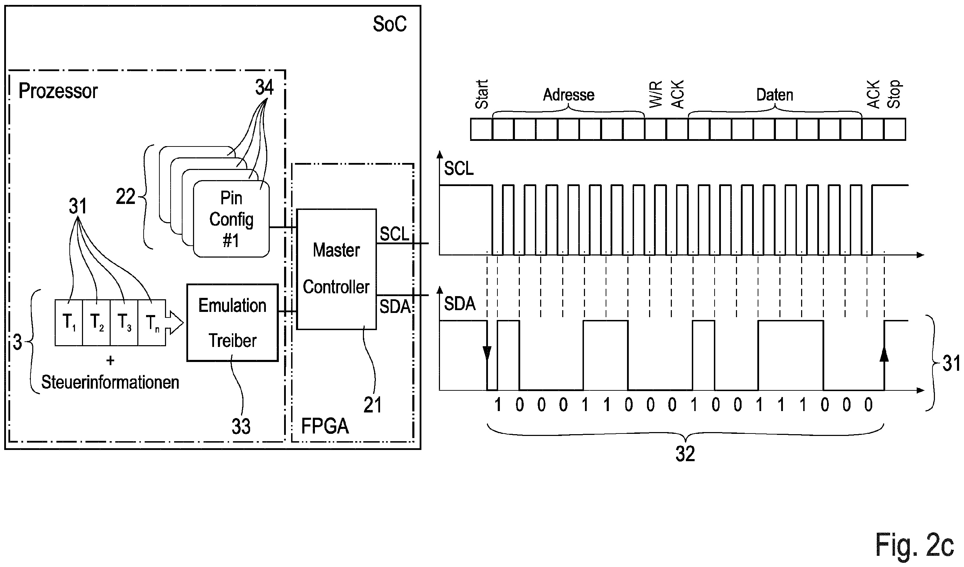

So verwendet das I²C-Protokoll neben dem Taktsignal (SCL) lediglich ein bidirektionales Signal (SDA) für die Datenübertragung. Die Mastereinheit 11 von Fig. 2a, 2b, 2c ist somit verantwortlich, für seinen SDA-Pin nach einer definierten Anzahl von Takten die Funktionsweise von Ausgang (Treiben) auf Eingang (Empfangen) zu verändern.

Im Gegensatz dazu verwendet das Quad-SPI-Interface gemäß Fig. 3a-3c sechs Signale, das Taktsignal SCK, das das ChipSelect-Signal CS und vier bidirektionale Datensignale IO0-IO3. Hierbei werden mit jedem Takt entsprechend der Taktsequenz (Burst) Daten auf den IO0-IO3 des universellen Masters 11 getrieben oder gemessen.

Nach derzeitigem Stand der Technik, der in Fig. 2b und Fig. 3b gezeigt ist, werden protokollspezifische Master-Controller 11 eingesetzt. Derartige spezifische Mastereinheiten 11 werden von einer Software (nicht gezeichnet) angesteuert, die protokollspezifische Informationen in die internen Register der Mastereinheit 11 hinterlegt. Die Mastereinheit 11 verwendet diese Informationen, um die notwendige Taktsequenz 32 (Kommunikationsschema) auf seinen Pins 24 zu erzeugen. Folglich ist bei den beiden ausgewählten, sehr häufig genutzten synchron-seriellen Protokollen die Pin-Belegung der Mastereinheit 11, sowie das Format der Daten und die Art der Kommunikation wesentlich unterschiedlich. Diese Unterschiedlichkeit, die bisher zwangsläufig zur protokollspezifizierten Transformation der Ansteuerung der Mastereinheit 11 führte, wird mit dem erfindungsgemäßen Ansatz vermieden bzw. protokollunabhängig vereinheitlicht und vereinfacht.

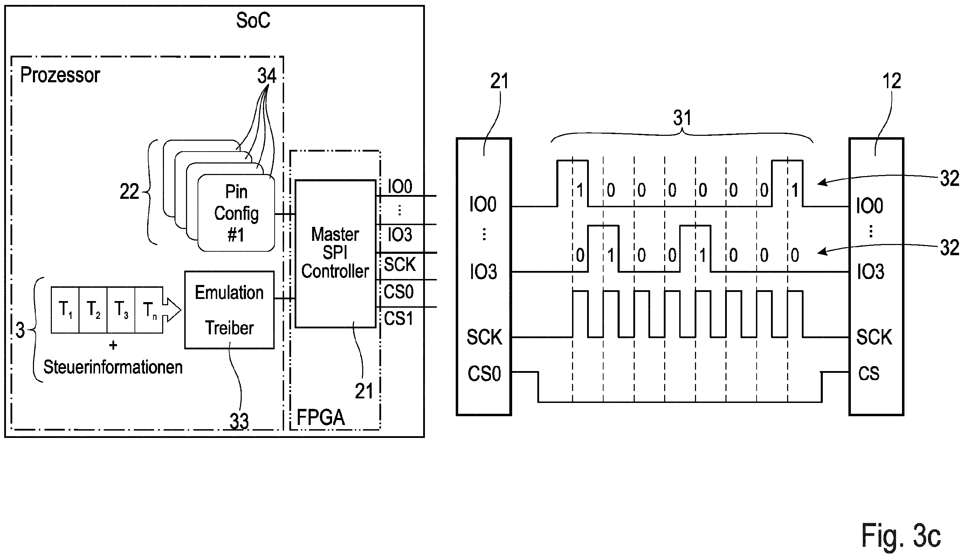

Im Gegensatz zum Stand der Technik (Fig. 2b, 3b) verwendet das erfindungsgemäße Verfahren (Fig. 2c, 3c) einen nicht protokollspezifischen universellen Master-Controller 21. Stattdessen verwendet der universelle Master-Controller 21 lediglich eine andere Pin-Konfiguration. Die Taktsequenz 32 (Kommunikationsschema) wird im Vergleich zum Stand der Technik nicht vom Master-Controller 21 erzeugt, sondern von einer Softwarekomponente 3 (nur schematisch gezeichnet) vollständig an den Emulationstreiber 33 gesendet und vom universellen Master-Controller 21 entsprechend der Taktkodierung 31 ausgeführt.

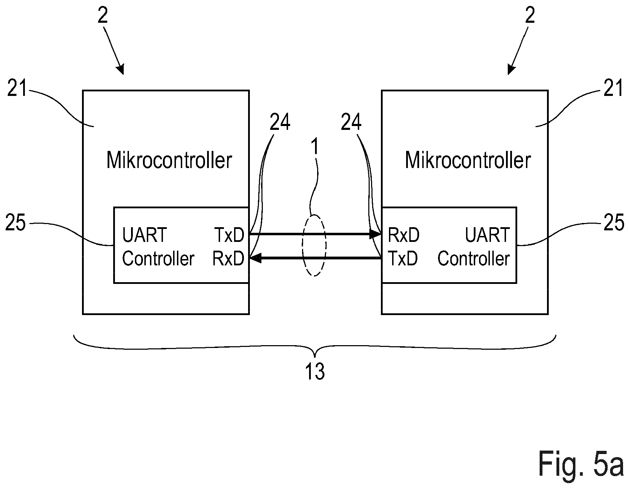

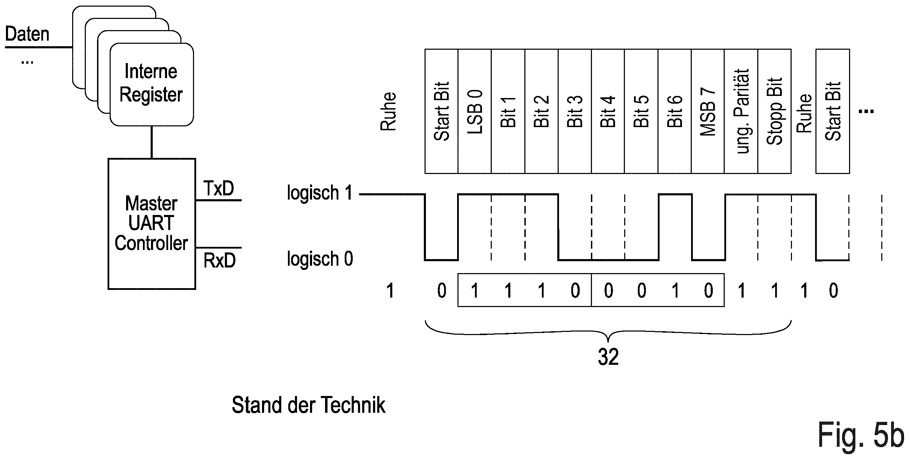

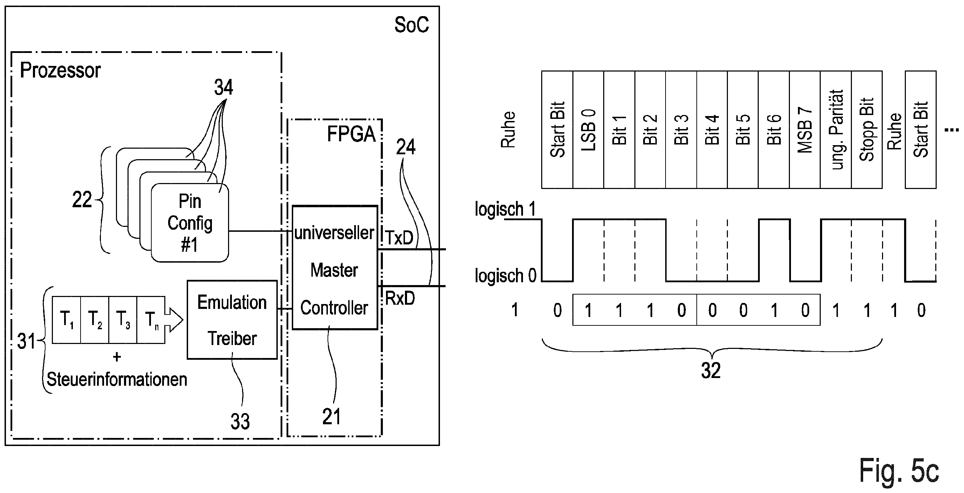

Die asynchron-seriellen Steuerungsarten sind in den Fig. 5a, 5b, 5c und Fig. 6a, 6b, 6c dargestellt. Diese zeigen die Verknüpfungen eines Master-Controllers 21 mit Multi-Mastern 13 an einem Systembus 1 für eine RS232-Kommunikation (Fig. 5a, 5b, 5c) bzw. für eine CAN-Kommunikation (Fig. 6a, 6b, 6c). Beide Konfigurationen verkörpern Informationsübertragungen mit asynchron-seriellen Protokollen, wobei die Unterschiede zu den Fig. 2 und 3 deutlich zu ersehen sind.

Fig. 5a zeigt eine typische RS232-UART-Punkt-zu-Punkt-Verbindung zwischen zwei Kommunikationsteilnehmern. Dabei verwendet jeder Teilnehmer ein TxD-Ausgangs- und ein RxD-Eingangs-Signal, das jeweils mit dem Eingangs-/Ausgangs-Signal des anderen Kommunikationsteilnehmers verbunden ist.

Fig. 6a zeigt eine typische CAN-Bus-Verbindung mehrerer Kommunikationsteilnehmer. Die Teilnehmer werden auch CAN-Knoten genannt und bestehen aus den drei Teilen, dem CAN-Transceiver 27, der den CAN-Controller 28 physikalisch mit dem (CAN-) Bussystem 1 verbindet, dem CAN-Controller 28, der für die Umsetzung des CAN-Protokolls verantwortlichen ist, und einem HOST 29 (meist eine innerhalb eines Mikrocontrollers laufende Softwareeinheit, die Daten senden/empfangen/verarbeiten kann). Jeder CAN-Controller 28 verwendet dabei ein TxD-Ausgangs- und ein RxD-Eingangs-Signal, die mit dem CAN-Transceiver 27 verbunden sind. Da es mehrere Bus-Teilnehmer gibt, ist jede Master-Controller 21 bzw. 28 eigenständig verantwortlich, nur dann Daten auf seinem TxD-Ausgang zu senden, wenn gerade kein anderer Bus-Teilnehmer Daten sendet. Dazu muss jeder Master-Controller 21, 28 seinen RxD-Eingang überwachen, um Konflikte zu vermeiden.

Im Gegensatz zu den synchronen Protokollen, existiert bei den asynchron-seriellen Protokollen kein gemeinsames Takt-Signal. Daraus resultiert das theoretisch jeder Kommunikationsteilnehmer zu jeder Zeit Daten versenden kann. In diesem Fall spricht man von einem Multi-Master-System 13 und nicht von einem Master-Slave-System.

Nach aktuellen Stand der Technik (Fig. 5b, 6b) werden protokollspezifische Master-controller 11 eingesetzt. Diese Mastercontroller 11 werden von einer Software (nicht gezeichnet) angesteuert, die Protokoll spezifische Informationen in die internen Register des Master 11 hinterlegt. Der Master 11 verwendet diese Informationen um die notwendige Taktsequenz 32 (Kommunikationsschema) auf seinen Pins zu erzeugen.

Folglich ist bei den beiden ausgewählten, sehr häufig genutzten asynchronen seriellen Protokollen, UART und CAN, die Pin-Konfiguration 34 des Master-Controllers 21 gleich. Das Format der Daten und die Art der Kommunikation sind jedoch unterschiedlich. Diese Unterschiedlichkeit, die herkömmlich zur zwangsläufig protokollspezifizierten Transformation der Ansteuerung des Master-Controllers 21 führte, wird mit dem erfindungsgemäßen Ansatz vermieden bzw. protokollunabhängig vereinheitlicht und vereinfacht.

Im Gegensatz zum Stand der Technik (Fig. 5b, 6b) verwendet das erfindungsgemäße Verfahren (Fig. 5c, 6c) einen nicht protokollspezifischen universellen Master-Controller 21. Dieser Master-Controller 21 verwendet je nach Protokoll lediglich eine andere Pin-Konfiguration. Die Taktsequenz 32 (Kommunikationsschema) wird im Vergleich zum Stand der Technik nicht vom Master-Controller 21 erzeugt, sondern von der Softwarekomponente 3 (nur schematisch gezeichnet) vollständig an den Emulationstreiber 33 gesendet und vom universellen Master-Controller 21 entsprechend der Taktkodierung 31 ausgeführt. Die generelle Funktion der Controller-Pins 24 ist durch eine aktive Pin-Konfiguration 34 definiert. Diese Pin-Konfiguration 34 definiert, ob ein Pin ein Eingang, Ausgang oder bidirektionaler Port ist, welche Zeitpunkte (steigende/fallende Taktflanke) für das Abtasten und Treiben von Signalen genutzt werden sollen, und ob es sich um eine synchrone oder asynchrone Übertragung handelt.

Der Hardwarekomponente 2 sind die realen Protokolle (I²C, SPI, JTAG, SWD, RS232, CAN, ...) unbekannt. Sie erhält von der Software lediglich eine Sequenz von Takten (Taktsequenz 32), wobei für jeden Takt eine Kodierung der Pin-Werte enthalten ist.

Diese erfindungsgemäße Taktsequenz 32 wird hier synonym verkürzt als "Burst 32" bezeichnet. Ein Burst 32 kann für seine Ausführung weitere Steuerinformationen hinterlegen. So ist es z.B. möglich, einen speziellen Burst 32 n-mal ausführen zu lassen (ohne dass der Burst 32 selbst n-mal von der Software an den Emulationstreiber 33 gesendet werden muss). Der Emulationstreiber 33 übernimmt dabei die Rolle der Steuerinstanz und überprüft, ob die Steueroptionen umgesetzt/erfüllt werden.

Nachfolgend sind Beispiele verfügbarer zusätzlicher Steuerinformationen angegeben, wobei mehrere Steuerinformationen für einen Burst 32 gleichzeitig verwendet werden können:

| Bezeichnung | Beschreibung |
|---|---|
| Burst Loop | führt einen empfangenen Burst 32 nacheinander n-mal aus. |
| Burst Read | liefert die abgetasteten Werte von Eingängen zurück. |
| Burst Expect | vergleicht Werte von Burst Read gegen Erwartungswerte u. beendet die Ausführung mit einem Fehler, wenn Soll-/Ist-Abweichung vorliegt. |
| Burst ExpectPoll | führt den übergebenen Burst 32 solange (Zeitangabe/Dauer) aus, bis Erwartungswert (Burst Expect) erfüllt oder Zeit (Polling) abgelaufen ist. |
| Burst DynamicData | speichert den übergebenen Burst 32 im Speicher des Master-Controllers 21 und erlaubt für definierte Pins 24 die Takt-Werte vor der Ausführung auszutauschen. |
| Burst SequenceLoop | Führt m Bursts 32 als Schleife aus und wiederholt diese Ausführung n-mal. Dabei kann für einzelne Bursts 32 (Dynamic Data) innerhalb der Schleife der Pin-Wert pro Takt ausgetauscht werden (pro Schleifendurchlauf). |
| Burst Continuous | Der letzte Pin-Wert eines Bursts wird bis zur nächsten Burst Ausführung beibehalten. Dadurch kann z.B. an einem Eingangspin permanent gemessen werden, während auf den Ausgangspins der Ruhepegel des Busses getrieben wird. |
| Burst ReadX | Im Zusammenspiel mit Burst Continuous und Burst ExpectPoll werden bei erfolgreichem Expect X weitere Takte gelesen und zurückgeliefert. |

Somit lassen sich sämtliche Übertragungsprotokolle umsetzen. Nachfolgend wird jeweils ein Beispiel für die sehr häufig genutzten synchronen Kommunikationsprotokolle I²C und SPI, sowie für die asynchronen Kommunikationsprotokolle RS232 und CAN unter Verwendung des erfindungsgemäßen Verfahrens angegeben. Die Anwendbarkeit der Erfindung ist aber nicht auf diese beschränkt, sondern lässt sich auch auf alle noch nicht bekannten oder anwenderspezifischen Übertragungsprotokolle anwenden sowie für die Ansteuerung von parallelen Interfaces, bei denen i.d.R. lediglich die Pin-Anzahl höher ist und dadurch nur ein Takt für eine komplette Datenübertragung benötigt wird.

### 1. Beispiel: I²C Bus Kommunikation

### Pin-Konfiguration 34: synchron

| Pin | Richtung | Treiben-Zeitpunkt | Abtast-Zeitpunkt |
|---|---|---|---|
| #1 Takt Signal | Ausgang | - | - |
| #2 SDA Signal | bidirektional | steigende Flanke | fallende Flanke |
| #3 unbenutzt | - | - | - |
| #4 unbenutzt | - | - | - |

Die Takt-Kodierung erfolgt durch Software (Takt-Kodierung von Pin #1; Takt-Signal wird automatisch gesteuert und muss nicht extra gesteuert werden).

| Takt | 1 | 2 | 3 | 4 | 5 | 6 | 7 | 8 |
|---|---|---|---|---|---|---|---|---|
| Pin #2 SDA | DH | DH | DL | DH | M | M | M | M |

| | | | | | | | | |
|---|---|---|---|---|---|---|---|---|
| DH = drive high; DL = drive low; M = Messen/Abtasten | | | | | | | | |

Mit dieser Sequenz werden vier Takte (1,1,0,1) auf Pin #2 (DATA-Pin) getrieben und dann vier Takte am Pin #2 gemessen. Somit lässt sich eine beliebige Folge von Pegeln (high/low) treiben und messen. Dies ermöglicht die Emulation eines beliebigen Protokolls mit einem bidirektionalen Controller-Pin 24.

### 2. Beispiel: SPI Bus Kommunikation

### Pin-Konfiguration 34: synchron

| Pin | Richtung | Treiben Zeitpunkt | Abtast Zeitpunkt |
|---|---|---|---|
| #1 Takt Signal | Ausgang | - | - |
| #2 IO0 | bidirektional | Steigende Flanke | Fallende Flanke |
| #3 IO1 | bidirektional | Steigende Flanke | Fallende Flanke |
| #4 IO2 | bidirektional | Steigende Flanke | Fallende Flanke |
| #5 IO3 | Bidirektional | Steigende Flanke | Fallende Flanke |
| #6 CS | Ausgang | Steigende Flanke | - |

| Takt | 1 | 2 | 3 | 4 | 5 | 6 | 7 | 8 |
|---|---|---|---|---|---|---|---|---|
| Pin #2 IO0 | DL | DH | DL | DL | M | M | M | M |
| Pin #3 IO1 | DL | DL | DH | DH | M | M | M | M |
| Pin #4 IO2 | DH | DL | DL | DH | M | M | M | M |
| Pin #5 IO3 | DH | DH | DL | DL | M | M | M | M |
| Pin #6 CS | DL | DL | DL | DL | DL | DL | DL | DH |

| | | | | | | | | |
|---|---|---|---|---|---|---|---|---|
| DH = drive high; DL = drive low; M = Messen/Abtasten | | | | | | | | |

Mit dieser Sequenz werden acht Takte ausgeführt, wobei zunächst vier Takte auf Pin #2 bis Pin #6 getrieben werden und danach vier Takte auf den bidirektionalen Pin #2 bis Pin #5 gemessen und auf Pin #6 weiterhin getrieben wird. Somit lässt sich eine beliebige Folge von Pegeln (high/low) treiben und messen. Dies ermöglicht die Emulation eines beliebigen Protokolls mit einem festen Ausgang und mehreren bidirektionalen Signalen.

### 3. Beispiel: UART- (RS232) und CAN-Kommunikation

### Pin-Konfiguration: asynchron

| Pin | Richtung | Treiben Zeitpunkt | Abtast Zeitpunkt |
|---|---|---|---|
| #1 TxD Signal | Ausgang | Steigende Flanke | - |
| #2 RxD Signal | Eingang | - | Fallende Flanke |

Die Takt-Kodierung erfolgt durch Software (bei asynchroner Konfiguration existiert kein Takt Signal).

| Takt | 1 | 2 | 3 | 4 | 5 | 6 | 7 | 8 |
|---|---|---|---|---|---|---|---|---|
| Pin #1 TxD | DL | DH | DL | DL | DL | DL | DH | DL |
| Pin #2 RxD | M | M | M | M | M | M | M | M |

| | | | | | | | | |
|---|---|---|---|---|---|---|---|---|
| DH = drive high; DL = drive low; M = Messen/Abtasten | | | | | | | | |

Mit dieser Sequenz werden acht Takte auf Pin #1 getrieben und zeitgleich werden acht Takte am Pin #2 gemessen. Somit lässt sich eine beliebige Folge von Pegeln (high/low) treiben und messen. Dies ermöglicht die Emulation eines beliebigen Protokolls mit einem Ein- und Ausgang.

Durch das Herauslösen der Protokoll-Logik aus der Hardware heraus und hinein in einen generellen Software Ansatz, besteht die Möglichkeit, beliebige Pegel-Sequenzen auf den einzelnen Controller-Pins 24 umzusetzen, ohne eine neue Hardware oder neue ProtokollTransformatoren zu entwickeln. Mit diesem Softwareansatz lassen sich somit alle Übertragungsprotokolle serieller und paralleler Interfaces umsetzen, dies gilt auch für nicht-standardisierte Übertragungsprotokolle (z.B. eine eigene Umsetzung des SPI-Protokolls - Variation der Reihenfolge von Kommando, Adresse und Daten bzw. Wegfallen einzelner Informationen) und serielle bzw. parallele Übertragungsprotokolle, die bisher noch nicht existieren.

### 3. Beispiel: Steueroptionen

Die Steuer-Optionen dienen der Optimierung bei der Ausführungszeit und ermöglichen zudem, komplexere Pegelabfolgen effektiv innerhalb der Hardware umzusetzen und zu steuern. Zur Verdeutlichung für die synchronen Protokolle wird hier das Beispiel einer Quad-SPI-Flash-Programmierung auf abstrakter Ebene gewählt. Diese besteht aus nachfolgenden Teilen:
1. WriteEnable Kommando 35 (erlaubt das Schreiben von Daten in den Flash)
   1.1 Aktiviere ChipSelect CS
   1.2 Sende Burst 32 für das Kommando
   1.3 Deaktiviere ChipSelect CS
2. PageProgram-Kommando 36 (programmiert 256-Byte Daten, beginnt bei der Adresse)
   2.1 Aktiviere ChipSelect CS
   2.2 Sende Burst für das Kommando
   2.3 Sende Burst für die Adresse
   2.4 Sende Burst für die Daten
   2.5 Deaktiviere ChipSelect CS (Flash beginnt das Programmieren der Daten)
3. ProgramStatus-Überprüfung 37 (Ready & Error-Flag des letzten Kommandos)
   3.1 Aktiviere ChipSelect CS
   3.2 Sende Burst 32 zum Auslesen des Status-Registers und Prüfe die Ready & Error-Bits
   3.3 Deaktiviere ChipSelect CS

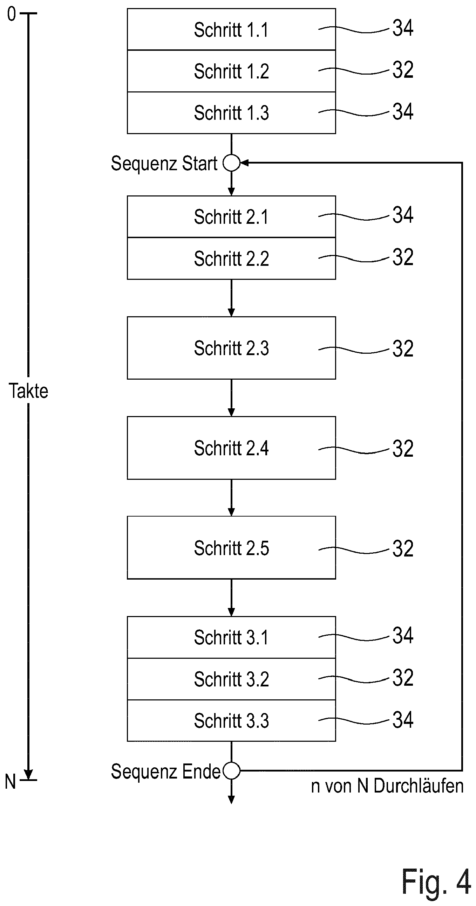

Fig. 4 zeigt eine bevorzugte Variante der Software-Komponente 2. Zur Programmierung von n-mal N-Byte-Daten lässt sich die in Fig. 4 gezeigte optimierte Abfolge von gleichartigen Schritten der vorstehend aufgelisteten Schrittfolge verkürzt (zeitoptimiert) umsetzen.

Beim WriteEnable-Kommando 35 wird ein fester Burst 32 für das Schreiben von Daten in den Flash gesendet, in dem bereits eine Burstinformation für eine Schleifenroutine mit enthalten ist.

Im PageProgram-Kommando 36 wird zunächst ein fester Burst 32 für das Kommando und die Aktivierung des ChipSelect CS gesendet. Danach folgen zwei weitere Bursts 32 für die Übermittlung der Adresse und die Übertragung der Daten. Im vorliegenden Beispiel erfolgt der Austausch der Pin #2 IO0 bis Pin #5 IO3 Werte zunächst aus dem übergebenem Datenfeld für "Adresse" und anschließend der Austausch der Pin#2 IO0 bis Pin #5 IO3-Werte aus übergebenem Datenfeld für "Daten". Letztere Bursts 32 sind vollkommen variable anpassbar an die erforderlichen Adressformate und die möglichen Datenumfänge und -formate. Abgeschlossen wird die Datenkommunikation dann für den jeweiligen n-ten Schleifen-Durchlauf durch einen festen Burst 32 (ohne Austausch der Pin-Werte) zur Deaktivierung des ChipSelect-CS-Signals.

Danach erfolgt mit dem ProgramStatus-Kommando 37 eine Überprüfung des letzten Programmkommandos (Ready & Error-Flag), bei dem wiederum ein fester Burst 32 (ohne Austausch der Pin-Werte) verwendet wird, wobei zunächst das ChipSelect-CS-Signal aktiviert wird, das Status Kommando über Pin #2 IO0 bis Pin #5 IO1 gesendet und danach der Status an Pin #2 IO0 bis Pin #5 IO3 gemessen und mit dem letzten Takt das ChipSelect-CS-Signal deaktiviert wird. Zusätzlich werden für Pin #2 IO0 bis Pin #5 IO3 Erwartungswerte für den zu messenden Status (high/low Pegel) hinterlegt. Des Weiteren bekommt dieser Burst 32 als Steuerinformation eine (maximale) Poll Zeit (z.B. 1800 µs), welche dazu führt, dass der Burst 32 solange erneut ausgeführt wird, bis die Erwartungswerte erfüllt sind oder die Poll-Zeit abgelaufen ist. Nach ereignislosem Verstreichen der Poll-Zeit würde die Schleifenausführung mit einem "Fehler" abgebrochen. Ansonsten wird die Schleife mit dem nächsten Durchlauf fortgesetzt, bis die vordefinierte Anzahl N der Schleifendurchläufe (N = 1, ..., n) erreicht ist.

Zur Verdeutlichung für die asynchronen Protokolle wird hier das Beispiel einer RS232-Schnittstellen-UART-Kommunikation auf abstrakter Ebene gewählt. Diese besteht Beispielhaft aus nachfolgenden Teilen:
1. Senden eines Pakets an den Kommunikationsteilnehmer
   1.1 Senden eines Bursts mit Paket-Inhalt
2. Empfangen der Antwort auf das Paket vom Kommunikationsteilnehmer
   2.1 Senden eines Bursts zum Polling auf das Start-Bit der Antwort und Lesen der Antwort
   2.2 Beenden der Kommunikation.

Beim Senden des Pakets wird ein Burst 32 der Länge Elf (1 Start-Bit, 8 Datenbits, 1 Odd-Parity-Bit, 1 Stopp-Bit) versendet. Dabei werden keine besonderen Steuerinformationen für den Burst 32 hinterlegt.

Das Empfangen der Antwort ist durch einen Burst 32 der Länge Eins umgesetzt. Dabei wird für das Pin #1-TxD der Ruhepegel (logische Eins) verwendet und an Pin #2-RxD wird gemessen. Zusätzlich werden folgende Steuerinformationen verwendet:
Burst ExpectPolling, Burst Continuous, Burst ReadX (10 Takte).

Durch Burst Continuous werden die Werte permanent ausgegeben. Das ExpectPolling erwartet eine logische Null auf Pin #2-RxD, welche das Start-Bit des Antwort-Pakets darstellt. Für den Fall, dass das Start-Bit innerhalb des eingestellten Timeout-Intervalls (z.B. 20 ms) nicht erfolgt, wird die Ausführung mit einem Fehler beendet. Wird das Start-Bit empfangen, ist das ExpectPolling erfolgreich. Durch die Steuerinformation Burst ReadX werden die nachfolgenden 10 Takte (abgetasteten Werte = 8 Datenbits, 1 Odd-Parity-Bit, 1 Stopp-Bit) aus dem Datenspeicher 23 zurückgeliefert. Da bei erfolgreichem ExpectPolling die Controllerpins 24 weiterhin im Continuous-Modus laufen, wird ein zusätzlicher Burst 32 der Länge Eins versendet. Durch die fehlenden Steuerinformationen wird der Continuous-Modus beendet und somit das Treiben des Ruhepegels an Pin #1-TxD und das Abtasten an Pin #2-RxD beendet.

Im Gegensatz zu den synchronen Protokollen, existiert bei den asynchronen Protokollen kein gemeinsames Takt-Signal. Daraus resultiert das theoretisch jeder Kommunikationsteilnehmer zu jeder Zeit Daten versenden kann. In diesem Fall spricht man nicht von einem System von Master- und Slave-Einheiten 11, 12, sondern von einem Multi-Master-System 13. Folglich ist bei den beiden ausgewählten, sehr häufig genutzten asynchronen seriellen Protokollen die Pin-Belegung des Master-Controllers 21 gleich. Das Format der Daten und die Art der Kommunikation ist jedoch unterschiedlich. Diese Unterschiedlichkeit, die bisher zwangsläufig zur protokollspezifizierten Transformation der Ansteuerung des Master-Controllers 21 führte, wird mit dem erfindungsgemäßen Ansatz vermieden bzw. protokollunabhängig vereinheitlicht und vereinfacht.

Fig. 7 zeigt eine beispielhafte Gestaltung der Organisation der Hardware-Komponente 2. Es ist der prinzipielle Aufbau eines universellen Master-Controllers 21 schematisch dargestellt.

Die Konfigurationsregister 22, die Datenspeicher 23 und der Ausführer 26 werden vom Emulationstreiber 33 der Software-Komponente 3 bedient. Die taktorientierten Daten vom Emulationstreiber 33 werden ebenfalls taktorientiert je Controller-Pin 24 in den Datenspeichern 23 hinterlegt. Dies sorgt für eine optimale Speicherausnutzung. Um sehr große bzw. im Idealfall unendlich lange Bursts 32 zu ermöglichen, sind die Datenspeicher 23 als FIFO- (first-in-first-out-) Register implementiert, in die Daten parallel geschrieben und aus denen Daten parallel gelesen werden können. Damit können während der Abarbeitung eines Burst 32 dynamisch Daten nachgeladen werden, die zum Beispiel auch erst während der Ausführung erzeugt werden bzw. vorliegen. Für das Beispiel der Quad-SPI-Bus-Kommunikation bedeutet dies, dass nur einmalig die Pin-Konfigurationen 34 sowie die Datenspeicher für Pin#2 IO0 bis PIN#3 IO3, und Pin#4 CS übertragen werden müssen. Anschließend sind in der Schleife bei Schritt 2.3 und 2.4 nur noch die Datenspeicher 23 für Pin#2 IO0 bis PIN#5 IO3, der die zu schreibenden Werte enthält, zu übertragen. Damit ist die zu transferierende Datenmenge auf ein Minimum reduziert.

Somit ist das erfindungsgemäße Verfahren nicht nur dynamisch, sondern auch effektiv im Sinne der Performance und Ausführungszeit. Da die Umsetzung der Übertragungsprotokolle nicht mehr in einzelne IP-Cores unterschieden wird, sondern nur ein IP-Core existiert, dem die Pin-Konfiguration 34 und die Taktsequenz 32 rechtzeitig vor Beginn der Laufzeit der Taktsequenz gesendet wird, ist das "Platz"-Problem in einem dem Master-Controller 21 zugeordneten FPGA gelöst. Außerdem entfällt der Aufwand der Anpassung/Erweiterung der Software-Komponente 3, da sich an dem Zugriff des Emulation-Treibers 33 auf die Hardware-Komponente 2 nichts verändert.

### Bezugszeichen

- 1: Bussystem
- 11: Mastereinheit
- 12: Slaveeinheit
- 13: Multi-Master-System
- 2: Hardwarekomponente
- 21: Master-Controller
- 22: Konfigurationsregister
- 23: Datenspeicher
- 24: Controller-Pin
- 25: Pin-Treiber
- 26: Ausführer
- 27: CAN-Transceiver
- 28: CAN-Controller (Master)
- 29: Anwendungsgerät (Host)
- 3: Softwarekomponente
- 31: Taktkodierung
- 32: Taktsequenz (Burst)
- 33: Emulations-Treiber
- 34: Pin-Konfiguration
- 35: WriteEnable-Kommando (ChipSelect)
- 36: PageProgram-Kommando
- 37: ProgramStatus-Kommando

## Patentansprüche

1. Verfahren zur Emulation von seriellen Protokollen der Datenkommunikation zwischen Hardwarekomponenten, die mittels Controllern in einem Master-Slave-System (11, 12) oder einer Multi-Master Konfiguration (13) an ein Bussystem (1) gekoppelt sind, mit den Schritten:
- Bereitstellen einer mit dem Bussystem verbundenen Hardwarekomponente, die einen universellen Master-Controller unabhängig des Bussystems enthält,
- Bereitstellen einer Softwarekomponente, die für die Datenkommunikation den universellen Master-Controller protokollunabhängig mittels einer generischen taktorientierten Kodierung ansteuert,
- Erzeugen von unterschiedlichen Taktsequenzen der taktgesteuerten Kodierung zur Steuerung der Pin-Funktionen von Controller-Pins des universellen Master-Controllers,
- Ansteuern des universellen Master-Controllers mittels jeweils einer bestimmten aus unterschiedlich modulierten Binärsignalen bestehenden Taktsequenz, die mindestens definiert, ob ein Controller-Pin als Eingang, Ausgang oder bidirektionaler Port definiert wird und welche Zeitpunkte für das Abtasten oder Treiben von Signalen genutzt werden.

2. Verfahren nach Anspruch 1, **dadurch gekennzeichnet, dass** die Taktsequenzen (32) so erzeugt werden, dass sie für jeden Takt eine Kodierung der Pin-Werte enthalten.

3. Verfahren nach Anspruch 1, **dadurch gekennzeichnet, dass** die Taktsequenzen (32) so erzeugt werden, dass sie als Zeitpunkte für das Abtasten oder Treiben von Signalen entweder die steigende oder die fallende Flanke verwenden.

4. Verfahren nach Anspruch 1, **dadurch gekennzeichnet, dass** neben unterschiedlichen Taktsequenzen (32) zur Steuerung der Pin-Funktionen, Taktsequenzen (32) für weitere Steuerinformationen erzeugt werden, die einen Emulations-Treiber (33) zur Ausführung von erweiterten Steueroptionen bei der Steuerung der Pin-Funktionen ansteuern.

5. Verfahren nach Anspruch 4, **dadurch gekennzeichnet, dass** neben unterschiedlichen Taktsequenzen (32) zur Steuerung der Pin-Funktionen weitere Taktsequenzen (31) für Steueroptionen erzeugt werden, die den Emulations-Treiber (33) zur Prüfung der Erfüllung der erweiterten Steueroptionen ansteuern.

6. Verfahren nach einem der Ansprüche 1 bis 5, **dadurch gekennzeichnet, dass** die Taktsequenzen (32) zur Steuerung der Pin-Funktionen oder weitere Taktsequenzen (32) für Steueroptionen mit variierbaren Signalpegeln erzeugt werden, um beliebige serielle Protokolle auf die Controller-Pins (24) umsetzen zu können.

7. Verfahren nach einem der Ansprüche 4 bis 6, **dadurch gekennzeichnet, dass** die weiteren Taktsequenzen (32) für Steueroptionen zum Optimieren der Ausführungszeit der Steuerung der Pin-Funktionen verwendet werden.

8. Verfahren nach einem der Ansprüche 4 bis 7, **dadurch gekennzeichnet, dass** die weiteren Taktsequenzen (32) für Steueroptionen zum Erzeugen komplexer Pegelfolgen verwendet werden.

9. Einrichtung zur Emulation von Übertragungsprotokollen zwischen Hardwarekomponenten (2), die mit Controllern an ein Bussystem (1) gekoppelt sind, **dadurch gekennzeichnet, dass**
- mindestens eine mit dem Bussystem verbundenen Hardwarekomponente einen universellen Master-Controller des Bussystems enthält,
- der mindestens eine universelle Master-Controller mit einer Softwarekomponente in Verbindung steht, die zur protokollunabhängigen Ansteuerung des Master-Controllers mit einer generischen taktorientierten Kodierung zur Pin-Konfiguration für die Datenkommunikation ausgestattet ist,
- der mindestens eine universelle Master-Controller für jeden Controller-Pin ein Konfigurationsregister und mindestens einen Datenspeicher aufweist, die über einen Ausführer mit den Pin-Treibern des Master-Controllers verknüpft und mittels eines Emulations-Treibers bedienbar sind.

10. Einrichtung nach Anspruch 9, **dadurch gekennzeichnet, dass** der mindestens eine universelle Master-Controller je nach Pin-Konfiguration bis zu drei Datenspeicher pro Pin umfasst, wobei bei einem Ausgangs-Pin ein Datenspeicher für die zu treibende Information, bei einem Eingangs-Pin ein Datenspeicher für die gemessenen Werte, und bei einem bidirektionalen Pin ein Ausgangs-Datenspeicher, ein Eingangs-Datenspeicher und ein Richtungs-Datenspeicher, welcher pro Takt vorgibt, ob der Pin als Eingang oder Ausgang verwendet werden soll, vorhanden sind.

11. Einrichtung nach einem der Ansprüche 9 oder 10, **dadurch gekennzeichnet, dass** die Datenspeicher (23) zur Speicherung der mit der generischen taktorientierten Kodierung (31) kodierten Daten vom Emulations-Treiber (25) für jeden Controller-Pin (24) taktorientiert organisiert sind.

12. Einrichtung nach einem der Ansprüche 9 bis 11, **dadurch gekennzeichnet, dass** die Datenspeicher (23) als FIFOs ausgebildet sind, sodass die Taktsequenzen (32) während der Abarbeitung dynamisch nachladbar und somit ohne Längenbegrenzung einsetzbar sind.

13. Einrichtung nach einem der Ansprüche 9 bis 12, **dadurch gekennzeichnet, dass** IP-Cores eines FPGAs nur für die unterschiedlichen Pin-Konfigurationen (34) und nicht mehr für die Transformation einzelner spezieller Übertragungsprotokolle vorhanden sind.
